# EUROPEAN PATENT APPLICATION

(11) **EP 3 053 694 A2**
(43) Date of publication of application: **10.08.2016**
(21) Application number: 15195060.7
(22) Date of filing: 17.11.2015
(51) Int. Cl.: B23K 20/00, B23K 20/12, B23K 31/02, B23K 31/12, C22F 1/10, C22F 1/18, F01D 5/18, F01D 5/28, F01D 5/30

(54) **HYBRID BONDED TURBINE ROTOR AND METHOD OF MANUFACTURING THE SAME**

(30) Priority: 24.11.2014 US 201414551293
(71) Applicant: Honeywell International Inc., Morris Plains, NJ 07950 (US)
(72) Inventor: MORRIS, Mark C., Morris Plains, NJ New Jersey 07950 (US); LEGZDINA, Daira, Morris Plains, NJ New Jersey 07950 (US); MITTENDORF, Don, Morris Plains, NJ New Jersey 07950 (US); ORTIZ, Milton, Morris Plains, NJ New Jersey 07950 (US); RIAHI, Ardeshir, Morris Plains, NJ New Jersey 07950 (US); VINUP, Michael, Morris Plains, NJ New Jersey 07950 (US)
(74) Representative: Houghton, Mark Phillip

(57) **Abstract**

An hybrid bonded turbine rotor (110) and a method of manufacturing the same are provided. A hybrid bonded turbine rotor (110) comprises a turbine disk (122) and a plurality of turbine blades (124) each metallurgically bonded to a corresponding raised blade attachment surface of a plurality of raised blade attachment surfaces of the turbine disk (122) to define a bond plane located at a selected radial position. The turbine disk (122) has a rim portion comprising a live rim of circumferentially continuous material and a plurality of live rim notches in an outer periphery of the turbine disk 8122) altemating with the plurality of raised blade attachment surfaces defining the outer periphery. The selected radial position is outboard of the live rim. Each pair of adjacent turbine blades (124) defines a shank cavity therebetween. The shank cavity extends radially outwardly from the live rim and includes a live rim notch disposed below the bond plane and above the live rim.

## Description

### TECHNICAL FIELD

The present invention generally relates to gas turbine engines, and more particularly relates tohybrid bonded turbine rotors and methods for manufacturing the same.

### BACKGROUND

Gas turbine engines may be used to power various types of vehicles and systems, such as air or land-based vehicles. In typical gas turbine engines, compressed air generated by axial and/or radial compressors is mixed with fuel and burned, and the expanding hot combustion gases are directed along a flowpath and through a turbine nozzle having stationary vanes. The combustion gas flow deflects off of the vanes and impinges upon turbine blades of a turbine rotor. A rotatable turbine disk or wheel, from which the turbine blades extend, spins at high speeds to produce power. Gas turbine engines used in aircraft use the power to draw more air into the engine and to pass high velocity combustion gas out of the gas turbine aft end to produce a forward thrust. Other gas turbine engines may use the power to turn a propeller or an electrical generator.

Compressor discharge (T3) and turbine inlet (T4.1) temperatures continue torise(advanced gas turbine engines will significantly benefit from compressor discharge temperatures in the1,200-1,400°F range with turbineinlet temperatures well above 3,000°F) toenable improved engine cycle efficiencies. Increased temperatures at the turbine disk rim and stress/temperature combinations well above the metallurgical limit of the conventional turbine rotor result, limitingturbine rotor life and hindering engine cycle improvement options. For example, a conventional turbine rotor using an insertable fir-tree design for attaching the turbine blades of a single crystal (SC) alloy to the turbine disk of a powder metal (PM) alloy may not be strong enough tosustain high speed stresses at the higher T3 and T4.1 temperatures, and the turbine disk may notbe capable of attaining adequate life atrim temperatures above 1,300 to 1,400°F. In addition, such conventional turbine rotors are expensive to manufacture, susceptible to detachment or separation of the turbine disk due to high stress/temperature combinations, and there is a potential for turbine blade walking.

Another conventional turbine rotor includes individual SC turbine blades brazed or diffusion bonded together to form a blade ring that is subsequently brazed or diffusion bonded to the PM turbine disk. There are inherent metallurgical problems with brazing or diffusion bonding the SC turbine blades to the PM turbine disk as these bonding techniques are performed athigh temperatures and may compromise the microstructure of the turbine disk. In addition, the multiple high temperature thermal cycles from bonding and heat treatmentwill likely resultin grain growthin theturbine disk alloy,thus compromising low cycle fatigue (LCF) behaviorin the disk hub. Diffusion bonding can alsolead to the formation of deleterious interface phases from the diffusion of elements from one alloy to the other from several hours of high temperature exposure. Bond plane phases can be distributedin such a manneras to compromise strength and toughness. Conventional diffusion bonding orbrazed approaches for attaching the turbine blades to the turbine disk in the conventional turbine rotor mayalso form carbides at the SC to PMbond plane, leading toa brittle bond joint and a subsequent reduced allowable design temperature and stress.

Moreover, diffusion bonding may require a high temperature vacuum environment. For diffusion bonding the turbine blades in an economical way, the turbine blades may be bonded simultaneously in a vacuum furnace. However, the mechanical loading on the turbine blades to press them into the turbine disk and hold them securely during simultaneous bonding is a challenging undertaking. The forces required for the diffusion bonding are very large, the tooling is expensive, and the resulting bonding may cause distortion in the resulting turbine rotor. In addition, a diffusion bonding process may compromise protective coatings on the turbine blades, so any protective coatings must be applied to the turbine blades in a potentially difficult non-lineof sight process after diffusion bonding.

Hence, there is a need for hybrid bonded turbine rotors and methods for manufacturing the same. There is also a need for hybrid bonded turbine rotors that can withstand higher compressor discharge (T3) and turbine inlet (T4.1) temperatures, enabling improvedengine cycleefficiencies and turbine rotor life, there by resulting in reductions in specific fuel consumption and turbine rotor weight and cost. There is an additional need for methods for manufacturing the hybrid bonded turbine rotors in which suitable metallurgical properties of the turbine disk and turbine blades are maintained.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

A hybrid bonded turbine rotor is provided. The hybrid bonded turbine rotor comprises a turbine disk and a plurality of turbine blades each metallurgically bonded to a corresponding raised blade attachment surface of a plurality of raised blade attachment surfaces of the turbine disk to define a bond plane located at a selected radial position. The turbine disk has a rim portion comprising a live rim of circumferentially continuous material and a plurality of live rim notches in an outer periphery of the turbine disk alternating with the plurality of raised blade attachment surfaces defining the outer periphery. The selected radial position is outboard of the live rim. Each pair of adjacent turbine blades defines a shank cavity therebetween. The shank cavity extends radially outwardly from the live rim and includes a live rim notch. The plurality of live rim notches are disposed below the bond plane and above the live rim.

A method is provided for manufacturing a hybrid bonded turbine rotor. The hybrid bonded turbine rotor comprises a plurality of turbine blades metallurgically bonded to a turbine disk at a bond plane. The method comprises determining a selected radial position for the bond plane above a live rim of the turbine disk and linear friction welding each turbine blade of the plurality of turbine blades to the turbine disk to form the bond plane at the selected radial position.

Furthermore, other desirable features and characteristics of the hybrid bonded turbine rotor, and the method for manufacturing the same will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 is a cross-sectional side view of a turbine section of an exemplary gas turbine engine;
FIG. 2 is an isometric view of a hybrid bonded turbine rotor manufactured according to exemplary embodiments of the present invention;
FIG. 3 is a perspective side view of a portion of thehybrid bonded turbine rotor of FIG. 2 including a turbine blade metallurgically bonded to a blade attachment surface of a turbine disk, according to exemplary embodiments of the present invention;
FIG. 4 is another view of the hybrid bonded turbine rotor portion of FIG. 3, depicting a cooling air supply feed channel (dotted lines) formed in a shank portion of the turbine blade and extending from an inlet opening disposed in a front face of the shank portion toward a rear face thereof;
FIG. 5 is another view of the hybrid bonded turbine rotor portion of FIGS. 3 and 4, depicting one of the side faces and the rear face of the turbine blade shank portion;
FIG.6A is a partial front view of the hybrid bonded turbine rotor of FIG. 2, depicting four circumferentially adjacent turbine blades (the turbine blade airfoils not shown and two of the four turbine blades partially shown), each turbine blade metallurgically bonded to the corresponding blade attachment surface of the turbine disk forming a bond plane above a live rim of the turbine disk;
FIG. 6B is a partial perspective view of a portion of the hybrid bonded turbine rotor of FIG. 2, depicting forward and aft seal plates or rings mounted on the forward and aft surfaces thereof;
FIG. 7 is an isometric view of the turbine diskof FIGS. 2 through 6B in isolation, according to exemplary embodiments of the present invention;
FIG. 8 is an isometric view of one of the individual turbine blades of the hybrid bonded turbine rotor of FIGS. 2 through 6B, looking from the aft, according to exemplary embodiments of the present invention;
FIG. 9 is an isometric view of one of the individual turbine bladesof the hybrid bonded turbine rotor of FIGS. 2 through 6B, looking from the front, according to exemplary embodiments of the present invention;
FIG. 10 is a flow chart of a method for manufacturing the hybrid bonded turbine rotor of FIG. 2 according to exemplary embodiments of the present invention; and
FIG. 11 is a partial front view of a hybrid bonded turbine rotor in an alternative embodiment, depicting three circumferentially adjacent turbine blades (the turbine blade airfoils not shown and two of the three turbine blades partially shown), each turbine blade metallurgically bonded to the corresponding blade attachment surface of the turbine disk forming a bond plane above the live rim of the turbine disk.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

Various embodiments are directed to hybrid bonded turbine rotors and methods for manufacturing the same. The hybrid bonded turbine rotors according to exemplary embodiments of the present invention eliminate rotor failures due to turbine disk detachment or separation and turbine blade walking, enable diskrim temperatures to safely operate at temperatures exceeding 1500°F, and enableincreasedT3 and T4.1 temperatures to support future cyclerequirements, improving turbine rotor performance.The hybrid bonded turbine rotor according to exemplary embodiments of the present invention provides a reduction in specificfuel consumption and turbine rotorweight and cost and has an optimized metallurgical microstructure. The optimized metallurgical microstructure optimizes the mechanical properties in the turbine disk bore for burst and fatigue, the turbine disk rim for high temperature creep/fatigue, and the turbine blades for stress rupture, oxidation, and thermo-mechanical fatigue.

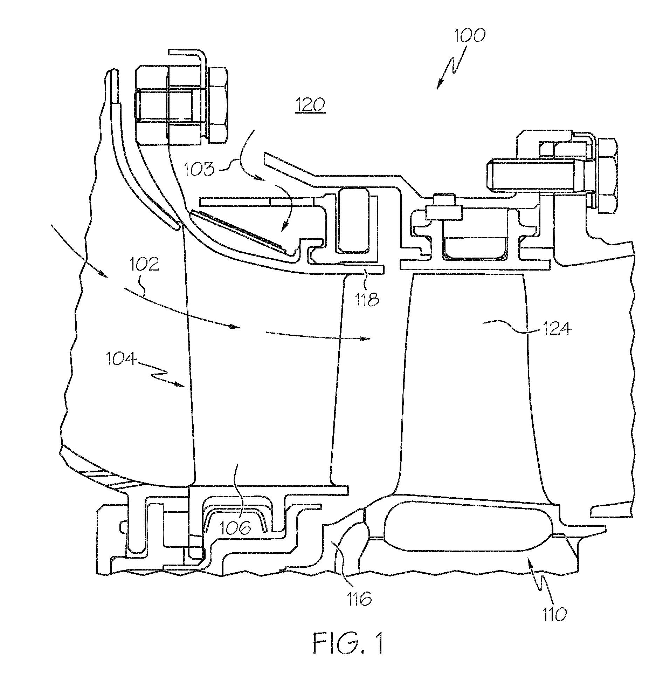

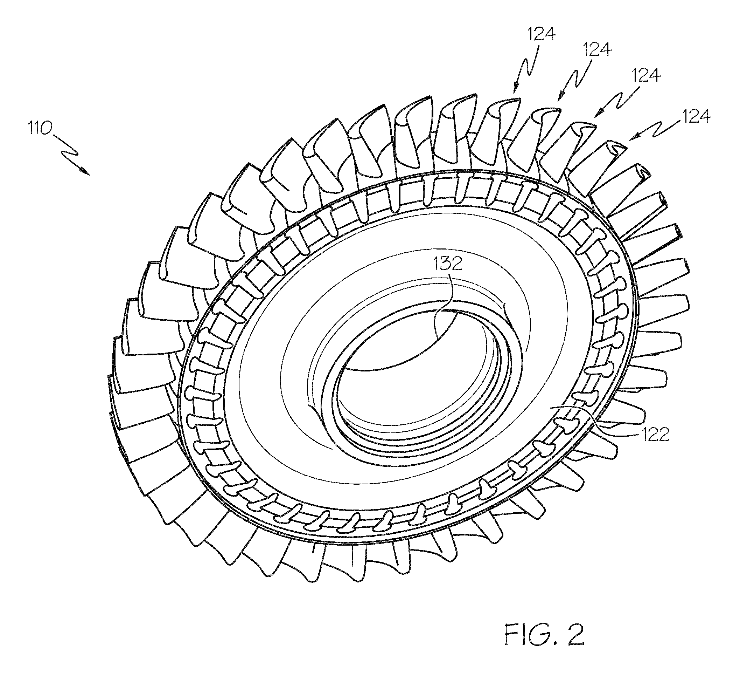

FIG. 1 is a cross-sectional side view of a portion of a turbine section 100 of an exemplary gas turbine engine. The turbine section 100 receives high temperature (e.g., a temperature typically in the range of about 1100 to 1800°C) gases (hereinafter "hot combustion gases") (arrow 102) from an upstream engine combustor (not shown) to produce energy for the engine and/or components coupled to the engine. The turbine section 100 includes a turbine nozzle 104 that has a plurality of static vanes 106 (only one of which is shown in FIG. 1) that direct the gases from the combustor to a hybrid bonded turbine rotor 110 (partially shown in FIG. 1). According to an embodiment (e.g., FIG. 2), the hybrid bonded turbine rotor 110 includes a plurality of turbine blades 124 (only one of which is shown in FIG. 1) that are retained in axial position by a retention plate 116. When the turbine blades 124 are impinged upon by the gases, the gases cause the hybrid bonded turbine rotor 110 to spin. An outer circumferential wall 118 may surround the static vanes 106 and defines a portion of a plenum 120. The plenum 120 receives cooling air (arrow 103) from a compressor section (not shown), which may be directed through one or more openings in the outer circumferential wall 118 to cool the static vanes 106.

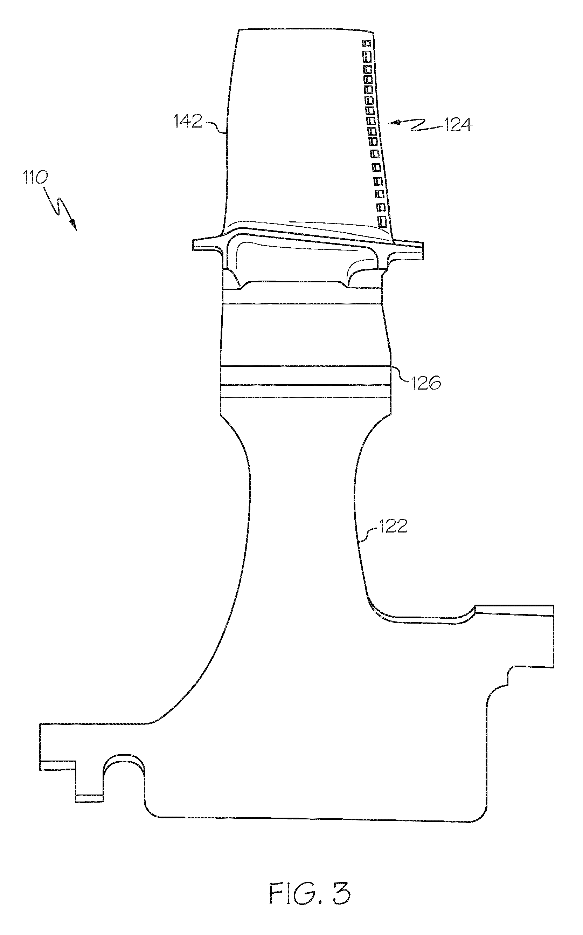

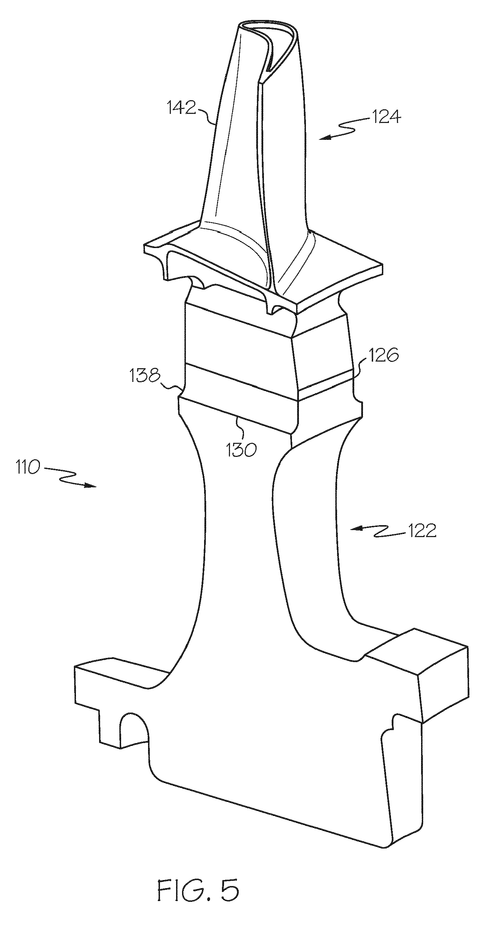

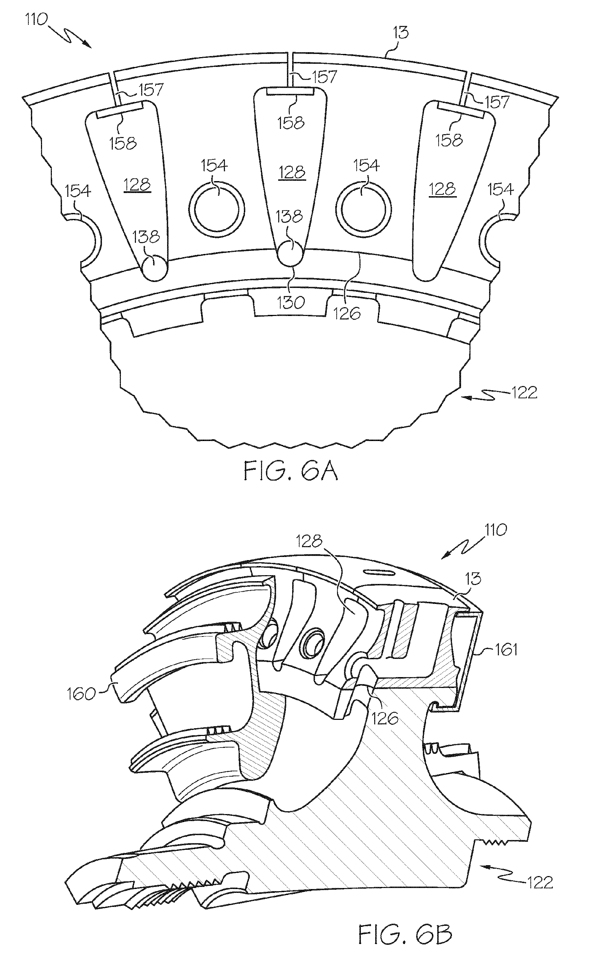

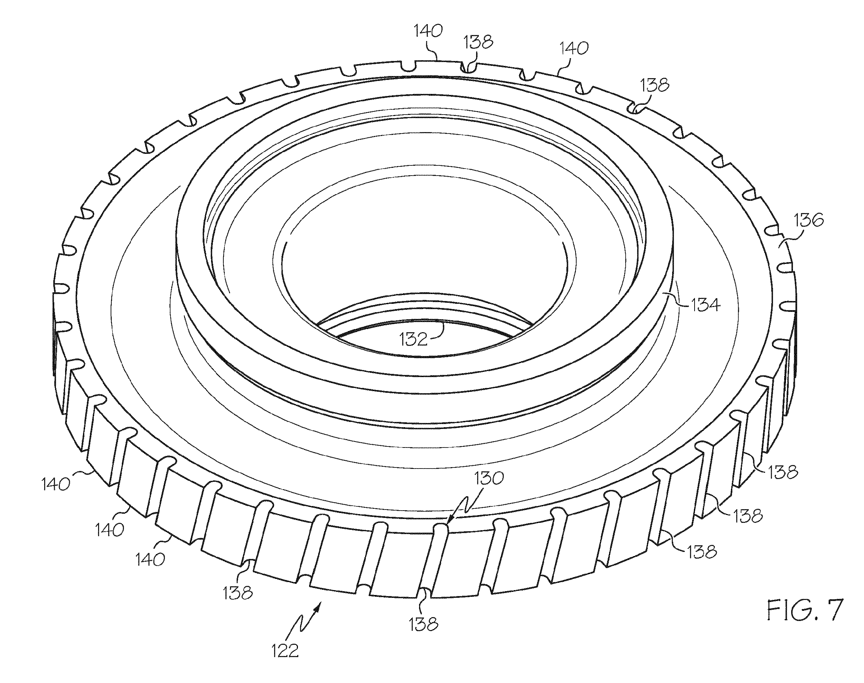

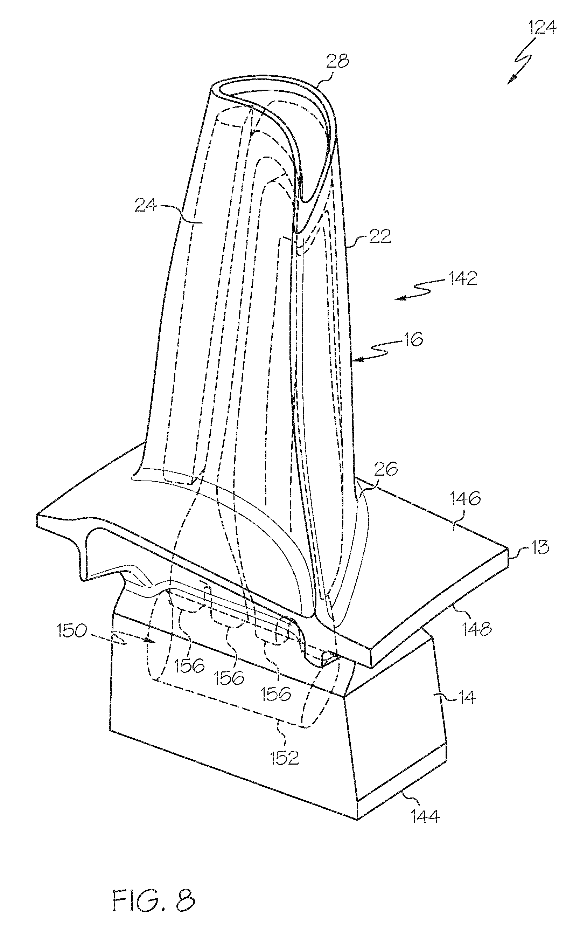

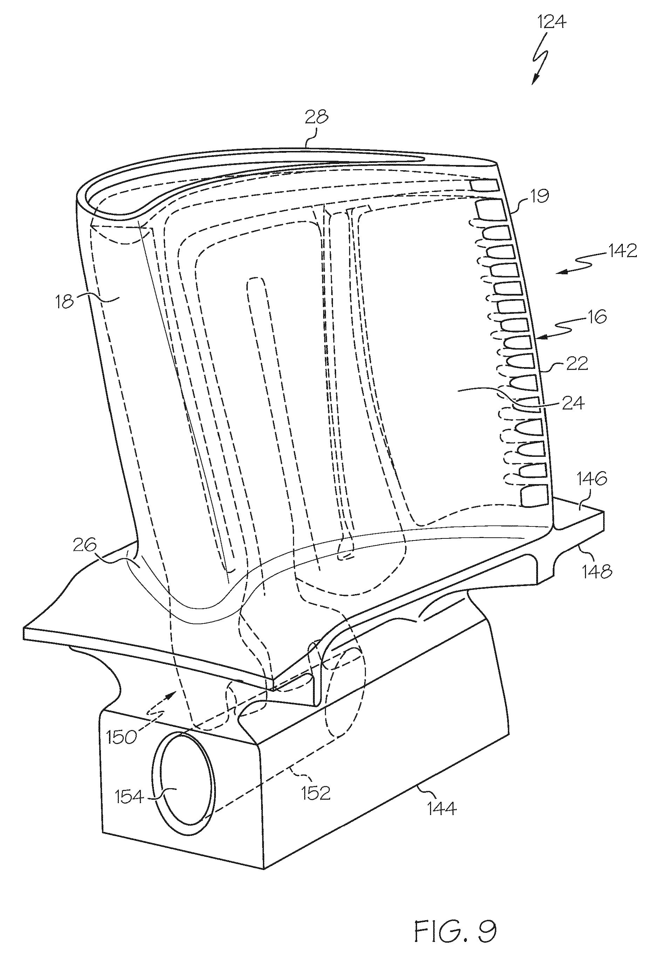

Referring again to FIG. 2 and now to FIGS. 3 through 6B, according to exemplary embodiments of the present invention, thehybrid bonded turbine rotor 110 is depicted. The hybrid bonded turbine rotor 110 generally comprises a turbine disk 122 (depicted in isolation in FIG. 7) and the plurality of turbine blades 124 (a single turbine blade is depicted in isolation in FIGS. 8 and 9) radially extending therefrom, each turbine blade 124 individually bonded on anouter periphery of the turbine disk 122 to define a bond plane 126 (FIGS. 3 through 6B) at a selected radial position. The hybrid bonded turbine rotor 110 further comprises a shank cavity 128 (FIGS. 6A and 6B) between each pair of adjacent turbine blades (more particularly between shank portions of adjacent turbine blades as hereinafter described). The hybrid bonded turbine rotor 110 comprises two different alloys (i.e., a hybrid), each having different metallurgical properties as hereinafter described.

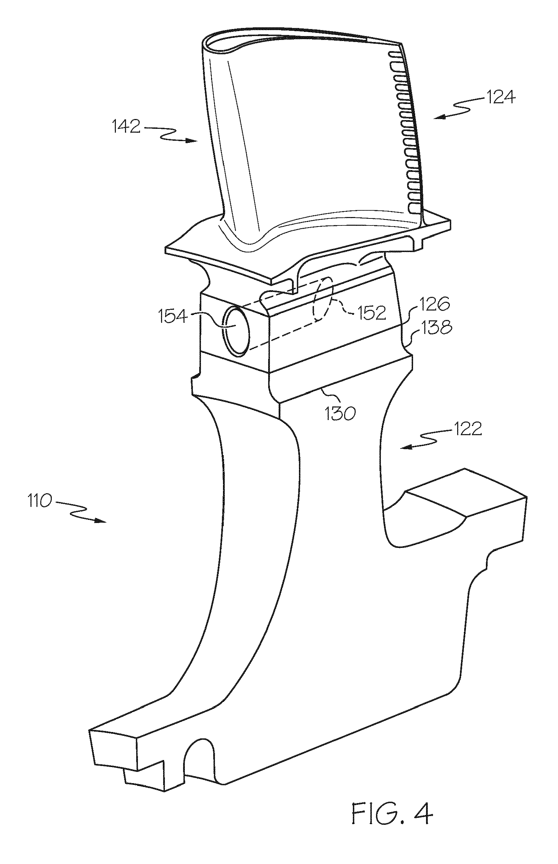

In accordance with exemplary embodiments of the present invention, each turbine blade 124 of the plurality of turbine blades in the hybrid bonded turbine rotor 110 is individually metallurgicallybonded to the turbine disk122at the bond plane 126 that is above a live rim 130 (FIGS. 4 through 6A and 7) of the turbine disk122 as hereinafter described. While 38 individual turbine blades are depicted as metallurgically bonded to the turbine disk in the depicted hybrid bonded turbine rotor 110 of FIG. 2, it is to be understood that there may be a fewer or greater number of turbine blades in the hybrid bonded turbine rotor 110.

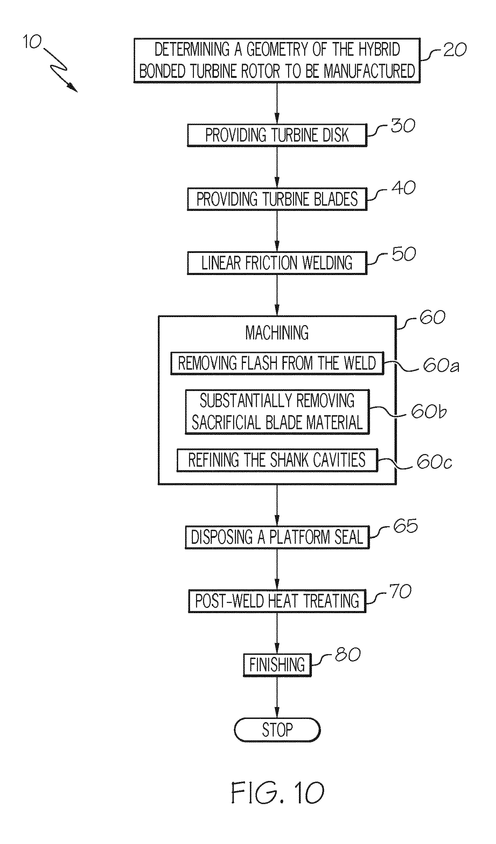

Referring now to FIG. 10, according to exemplary embodiments of the present invention, a method 10 for manufacturing the hybrid bonded turbine rotor according to exemplary embodiments of the present invention begins by determining a geometry of the hybrid bonded turbine rotor 110 to be manufactured that will provide predetermined stress and temperature combinations that will result in a predetermined life for the hybrid bonded turbine rotor (step 20). As used herein, the "geometry" to be determined includes aradius of the live rim 130 (a "live rim radius"), a fillet radius of a plurality of live rim notches 138 as hereinafter described, and the selected radial position for the bond plane 126of the hybrid bonded turbine rotor manufactured according to exemplary embodiments of the present invention as described herein. The selected radial position, the live rim radius, and the fillet radius of the plurality of live rim notches (i.e., the geometry of the hybrid bonded turbine rotor 110 to be manufactured) are determined using commercially available thermal and stress analysis methods as is known to those skilled in the art (such as NX Thermal by Siemens and ANSYS thermal and stress analysis programs) such that they provide the predetermined stress and temperature combinationsthat result in the predetermined life for the hybrid bonded turbine rotor.

The selected radial position for the bond plane 126 (e.g., FIGS. 6A and 6B) is above the live rim 130 of the turbine disk 122. The selected radial position for the bond plane 126 may be determined using a stress analysis optimization technique, such as by finite element computational analysis as is known to those skilled in the art. The selected radial position for the bond plane 126 depends upon an optimized stress and temperature prediction combination to balance the peak bore stress/temperature combination with the peak live rim notch stress/temperature combination to achieve acceptable disk burst, fatigue, and creep life at both locations. In addition, the selected radial position of the bond plane is disposed where the stress analysis provides an average (and preferably the peak) bond plane stress prediction of less than parent material yield strength at a temperature of about 1000°F to about 1500° Fahrenheit (°F). The bond plane 126 is preferably as far radially outward as the stress and temperature thereat will allow for acceptable life.The determining step 20may be performed at any time prior to the providing steps 30 and 40as hereinafter described.

The method 10 for manufacturing the hybrid bonded turbine rotor such as depicted in FIG. 2 continues by providing the turbine disk 122 (such as depicted in FIG. 7) (step 30). The turbine disk may be formed, for example, by forging, heat treating, and machining to a pre-weld condition as known in the art. The heat treating may include a sub-solvus or super-solvus heat treatment or may comprise a combination of sub-solvus heat treatment in the region of a turbine disk bore 132 to obtain optimal fine grain size low cycle fatigue and burst properties and a simultaneous super-solvus heat treatment in the live rim region 130 to obtain optimal larger grain high temperature properties. The turbine disk 122 provided in step 30 may include the plurality of live rim notches as depicted, for example, in FIG. 7 or the live rim notches may be formed in a subsequent machining step (more particularly, during a flash removing sub-step or a cavity refining sub-step thereof) as hereinafter described. The turbine disk provided in step 30 has the geometry determined in step 20.

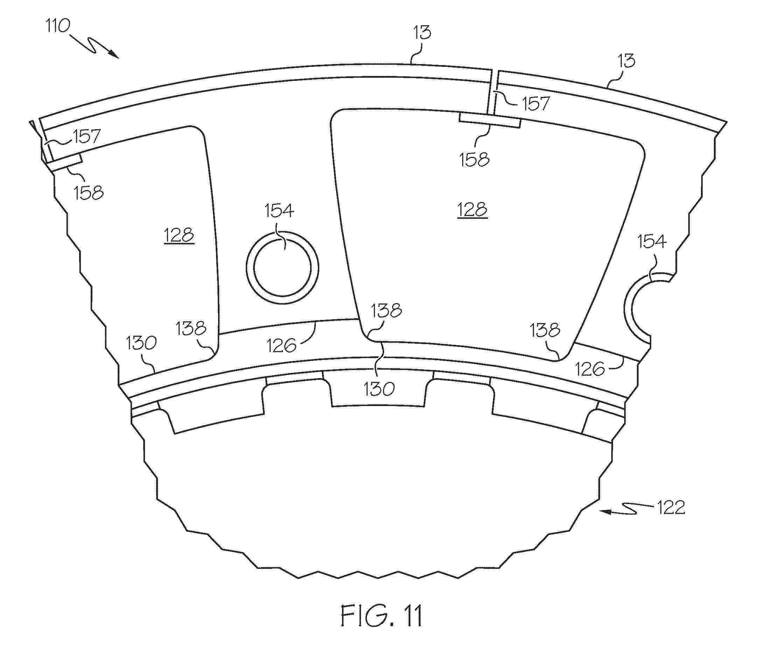

FIG. 7 is an isometric view of the turbine disk 122, according to exemplary embodiments of the present invention. The turbine disk 122 has the centrally-formed bore 132 defined by an inner hub portion 134. The turbine disk 122 also includes an outer rim portion 136. In accordance with exemplary embodiments of the present invention, the outer rim portion 136 comprises the live rim 130 of circumferentially continuous material and a plurality of live rim notches 138 in an outer periphery of the turbine disk alternating with a plurality of raised blade attachment surfaces 140 defining the outer periphery. The most outward portion of the outer rim portion having circumferentially continuous material which is uninterrupted by the peripheral live rim notches, is referred to as the "live rim" 130. The live rim radius is determined in step 20 as previously described. The live rim notches of the turbine disk provided in step 30 may have a stress-relieving configuration (i.e., the shape and contour (radius of curvature) of the live rim notches are optimized for hoop stress reduction.).Alternatively, the stress-relieving configuration of the live rim notches may not be provided until the machining step as hereinafter described.In either case, the fillet radius of the live rim notches is determined in step 20 as previously described.The live rim notch between adjacent raised blade attachment surfaces may be fully filleted on both sides bridging adjacent raised blade attachment surfaces as depicted in FIG. 6A. In an alternate embodiment as depicted in FIG. 11, adjacent raised blade attachment surfaces may be separated by a tangential distance that is larger than the fillet radius of the live rim notch.In the alternate embodiment, the fillets of each live rim notch are separated by a tangential distance/arc at a radial dimension of the live rim radius (the centerline of the arc is the engine centerline and the radius curvature of the arc is the live rim radius).The shank cavities 128 include the live rim notches 138 and extend radially outwardly from the live rim 130 to radially inwardly of the blade platform (more particularly, to the bottom surface (i.e., an inner surface) of the blade platform. As noted previously, the live rim notches 138 are located below the bond plane 126 and above the live rim 130, minimizing stress concentration proximate the bond plane. The live rim notches preferably minimally extend below the bond plane. The live rim notches may be used to collect and remove the flash that forms during the linear friction welding step. The raised blade attachment surfaces 140 may be substantially flat as depicted, cylindrical, conical, or other shapes that are determined to provide the desired stress/temperature combination that results in the desired life of the hybrid bonded turbine rotor according to exemplary embodiments. In addition, the blade attachment surfaces have a height that permits the bond plane to be at the optimal radial location determined in step 20.

The turbine disk 122 is formed from a first alloy selected from the class of alloys known as powdered metal (PM) alloys. A suitable exemplary PM alloy for the turbine disk includes a nickel-based alloy(including a nickel-based superalloy) or the like. A PMalloy with dual microstructure may be employed tooptimize high temperatureperformanceof the outer rim portion 136 of the turbine disk and tensile/ burst properties and low cycle fatigue strength (LCF) at turbine disk bore locations (the bore 132). In the dual microstructure turbine disk,theouter rim portion 136 has largergrains for high temperature creep resistance while the inner hub region 134 has smaller grains for optimal tensile/burst strength and (LCF) life. In other embodiments, the PM alloy does not have a dual microstructure. In still other embodiments, a forged disk may be used that is not fabricated from powder metal (PM).

Referring now to FIGS. 8 and 9 and still referring to FIG. 10, according to exemplary embodiments of the present invention, method 10 for manufacturing thehybrid bonded turbine rotor continues by providing the plurality of turbine blades (step40) (as exemplified by the turbine blade124 depicted in FIGS. 8 and 9). While step 40 is described as performed after step 30, it is to be understood that step 40 may be performed prior to or simultaneously with step 30. As used herein, a"turbine blade"124 includes a single turbine blade as depicted in FIGS. 8 and 9 or a multiplet such as a doublet (two turbine blades that are integrally formed as a single-piece unitary structure) (not shown). The step of providing the plurality of turbine blades may comprise forming the turbine blades. The turbine blades may be formed by casting as known in the art. The cast turbine blades may be heat treated, machined, and optionally coated to a pre-weld condition.For example, the turbine blades may be solution heat treated and aged to obtain optimal high temperature creep and fatigue strength. The pre-weld heat treatment may include a homogenized and solution heat treatment but may also include full heat treatment with homogenization, solution heat treatment, and precipitation aging thermal cycles. The step of providing the plurality of turbine blades (step 40) may further comprise optionally coating the individual turbine blades 124 with a protective coating material prior to alinear friction welding step 50as hereinafter described. The protective coating material may be an oxidation resistant coating, a corrosion resistant coating, a thermal barrier coating, or combinations thereof, applied in a manner well known to one skilled in the art. Optionally coating the turbine blades may be performed prior to, simultaneously with, or after step 30 of providing the turbine disk. The turbine blade surfaces to be welded are then prepared in a manner to remove oxides that may have formed from thermal and/or coating processes. The oxides may be removed by machining, grinding, chemical etching, or other methods known to those skilled in the art.

As best depicted in FIGS. 8 and 9, each of the turbine blades 124 comprises an airfoil portion 142 that protrudes outwardly from a shank portion 14. The shank portion 14 includes a base 144 for metallurgical bonding of the turbine blade 124 to the corresponding raised blade attachment surface 140 of the turbine disk 122 as hereinafter described. A blade platform 13 may be disposed between the airfoil portion 142 and the shank portion 14, i.e., the airfoil portion 142 extends radially outwardly from an outer surface 146 of the blade platform 13 and the shank portion 14 extends radially inwardly from an inner surface 148 (also known as a bottom surface) of the blade platform. The blade platformisolates the outerrim portion 136 (FIG. 7) of the turbine disk from the hot combustiongases (arrow 102 in FIG. 1).The shank portion 14 is under the blade platform but above the bond plane 126 (e.g., FIG. 6A).The turbine blades 124 may include an integral shroud (not shown) such that the turbine blade and shroud are a one-piece unitary structure. The turbine blade itself may alternatively be unshrouded. The airfoil portion 142 of each turbine blade comprises the airfoil 16 having leading and trailing edges 18 and 19, suction and pressure sides 22 and 24, and a root 26 and a tip 28. The turbine blades 124 may include sacrificial material (oversized root stock) (not shown for ease of illustration)for clamping or holding the turbine blade during the linear friction welding machine operation as hereinafter described (i.e., the sacrificial material serves as a clamping surface for the tooling used in the linear friction welding operation).

The turbine blades 124 may comprise a single crystal alloy or a directionally solidified alloy (a "second alloy").The turbine blades may be cast by casting methods well known in the art. As used herein, a "single crystal alloy" is an alloy in which substantially the entire alloy has a single crystallographic orientation, without the presence of high angle grain boundaries. A small amount of low angle grain boundaries such as tilt, or twist boundaries are permitted within such a single crystal article but are preferably not present. However, such low angle boundaries are often present after solidification and formation of the single crystal article, or after some deformation of the article during creep or other light deformation process. Other minor irregularities are also permitted within the scope of the term "single crystal". For example, small areas of high angle grain boundaries may be formed in various portions of the article, due to the inability of the single crystal to grow perfectly near corners and the like. Such deviations from a perfect single crystal, which are found in normal commercial production operations, are within the scope of the term single crystal as used herein. The single crystal blades are oriented preferably such that the crystallographic direction is aligned with the radial direction of the turbine rotor to obtain optimal creep resistance for the turbine blades. This is similar to the method used to orient directionally solidified blades, however, with only one grain. As used herein, the term "directionally solidified alloy" is an alloy in which columnar multiple grains may exist but each grain has a preferred direction or orientation close to the [001] direction that is aligned with the turbine rotor radial direction. The single crystal or directionally solidified turbine blades are exposed to the highest temperatureson the hybrid bonded turbine rotor, and the single crystal or directionally solidified alloysoptimize stressrupture,thermo-mechanical,and oxidation life of the turbine blades. Suitable exemplary single crystal and directionally solidified alloys include, for example, nickel-based alloys with anisotropic material properties such as creep and Young's modulus. Polycrystalline equi-axed nickel-based alloys may also be used for forming the turbine blades according to exemplary embodiments. The turbine blades may alternatively be formed of other alloys, such as titanium aluminide polycrystalline blades, nickel aluminide polycrystalline blades (also referred to as the "second alloy"), or the like, and in alternate embodiments, the turbine blades may be forged or machined rather than cast.

In some embodiments, the turbine blades 124 may utilize a controlled secondary [010] or [100] crystallographic orientation as well as the primary [001] controlled radial orientation. For example, some turbine rotors may benefit from defining a secondary grain orientation [010] or [100] in the airfoil chordwise direction (from leading edge 18 to trailing edge 19) or in a similar direction to minimize thermo-mechanical fatigue stresses in the turbine rotor. Stress analyses are performed to determine the optimal secondary crystallographic orientation that results in optimal blade life, as is known to those skilled in the art.

In some embodiments, the turbine blades 124 further comprise an internal cooling circuit 150 (e.g., FIGS. 8 and 9). The internal cooling circuit comprises a cooling air supply feed channel 152 formed in the shank portion 14 and extending from an inlet opening 154 in a front face of the shank portion toward a rear face of the shank portion and a plurality of cooling passages 156 (dotted lines in FIG. 8) extending from the cooling air supply feed channel 152 to the airfoil 16, the cooling passages 156 communicating with outlet openings (not shown) that may be formed in the turbine blade. The internal cooling circuit brings cooling air discharged from the compressor through the front surface of the shank portion and up into the airfoil 16 above the bond plane 126 (as hereinafter described) to enable the cooling air to enter the airfoil for cooling. In accordance with exemplary embodiments, the position and shape of the inlet opening 154 are selectively determined to decrease heat flow to the bond plane 126 and to optimize the stress distribution in and around the bond plane 126. More specifically, the location of the inlet opening and cooling passages reduce heat flow down to the bond plane 126, thereby managing bond plane temperatures. Theinlet opening 154 to the internal cooling circuit is located above the bond plane (that is above the live rim) to achieve maximum bondplane area,and thebondplane mayprotrude forward and/or aft axially and tangentially if necessarytofurther increase the bond plane areatominimize bond planestress. The inlet opening in the front face of the shank portion of the turbine blade according to exemplary embodiments utilizes a forward air feed (and basically axial flow passage in the turbine blade) to enable the air passage to create a large thermal resistance in the remaining metal cross sectional area around the air passage for the heat conducting radially inward from the airfoil and platform to the bond plane, thereby reducing the temperature of the entire bond plane (inlet and non-inlet faces alike) for a more durable and robust configuration. As the heat from the turbine blade is conducted around the substantially symmetrical inlet opening 154, the pressure and suction side cross-sectional areas around the inlet opening choke down the heat flow from the airfoil, resulting in an overall lower peak bond plane temperature. The shape of the cooling air supply feed channel 152 and the inlet opening 154 are also selected to provide a more uniform stress distribution along the bond plane 126. To minimize the peak stress in the bond plane 126, the cross section of the feed channel 152 and the inlet opening 154 may be generally oval or racetrack in shape with the major axis in the radial direction and with the minor axis in the tangential direction. This enables the radial load in the turbine blade to more easily pass around the feed channel 152 and to spread out more uniformly across the bond plane area than would occur if using a cooling channel with a circular shaped cross-section. The exact shape and aspect ratio of the feed channel 152 and inlet opening 154 may be determined using stress analysis optimization as is known to those skilled in the art. In other embodiments, the cooling air inlet opening 154, cooling air supply feed channel 152, and the plurality of cooling passages 156 may be designed for an aft feed configuration where the cooling air enters the rotor from the aft side of the turbine rotor. In other embodiments, the hybrid bonded turbine rotor 110 may be uncooled.

The method 10 for manufacturing thehybrid bonded turbine rotor according to exemplary embodiments of the present invention continues by linear friction welding each turbine blade of the plurality of turbine blades to theturbine diskto form the bond plane at the selected radial position (step 50) (more particularly, linear friction welding the base of the shank portion of the turbine blade to the corresponding raised blade attachment surface 140 of the turbine disk). The linear friction welding step 50 forms a metallurgical bondbetween the turbine disk 122 and the turbine blade 124. The term "bond plane" includes a planar bond plane, a curved bond plane, or a conical bond plane. The metallurgical bonds in the hybrid bonded turbine rotor 110 form the continuous bond plane 126 (FIGS. 6A and 6B) that is above the live rim 130 of the turbine disk.As noted previously, the radial position of the bond plane is determined in step 20 basedon thermal and stress optimizations to achieve maximum strength and life for thehybrid bonded turbine rotor. The selected radial position of the bond plane outboard of the live rim depends upon the stress and temperature in the area proximate the bond plane and the physical requirement that the base of the shank portion of the turbine blade is contoured to the outer surface (rim) of the turbine disk. The step of linear friction welding each turbine blade to the turbine disk is repeated until the plurality of turbine blades provided in step 40 are metallurgically bonded to the turbine disk(more particularly, to the corresponding raised blade attachments surfaces 140 thereof) at which point the entire linear friction welding operation is complete, thereby forming a "bonded assembly".The bond plane in the bonded assembly may be larger than contact bearing areas of conventional insertable blade turbine rotors. A larger bond plane area enables higher rotational speeds, increased cycle efficiency, and decreased specific fuel consumption. The bonded assembly includes the shank cavity 128 (e.g., FIG. 6A) between each pair of adjacent turbine blades (more particularly between shank portions of adjacent turbine blades as hereinafter described).The shank cavities reduce turbine rotor weight and turbine rotor inertia. The shank cavities 128 may be refined in a subsequent machining step as hereinafter described.

In general, as known to one skilled in the art, linear friction welding (LFW) is a solid state joining process in which a stationary part (here, the turbine disk) is forced against a part (here, the turbine blade) that is reciprocating in a linear manner in order to generate frictional heat. The reciprocating motion may be along any direction that does not interfere with adjacent blades. The direction of reciprocating motion may be generally parallel to the platform angle, which is substantially parallel with the platform tangential edges (that extend outward from the airfoil pressure side 24 root and from the airfoil suction side 22 root) to maintain a constant gap 157 between adjacent blade platforms 13 of the circumferentially adjacent turbine blades. This is generally an axial direction from the front to the aft direction of the turbine blade along the blade platform angle (that is generally between 0 to 25 degrees from the axial direction) and enables the blade to freely reciprocate without contacting adjacent blades. In alternate embodiments, the direction of reciprocation may be axial, tangential, or in any direction that does not cause interference with adjacent blades. As noted previously, the oversized root stock around the blade platform of the turbine blade provides a clamping surface and additional space (relative to the space that would be provided by a turbine blade without the oversized root stock) for the LFW tooling to be disposed during the liner friction welding operation, between the individual turbine blade being bonded and the circumferentially adjacent individual turbine disk. The additional space enables easier and substantially unimpeded linear friction welding. The heat, along with the force applied perpendicular to the weld interface (i.e., the bond plane), causes material at the interface to deform and plasticise. Much of this plasticised material is subsequently removed from the weld, as flash, because of the combined action of the applied force and part movement. Surface-oxides and other impurities are removed, along with the plasticised material, and this allows metal-to-metal contact between the individual turbine blade and the turbine disk and allows a joint (the weld) to form at the bond plane. A defining feature of the linear friction welding process, along with all other friction welding processes, is that it takes place in the solid state and involves no melting of the parts to be joined. This means that linear friction welding offers advantages over fusion welding when joining metals that exhibit solidification problems (e.g.,porosity, hot cracking, segregation etc.). In addition, in most cases the severe deformation in the weld region during linear friction welding results in a refined microstructure that can provide improved strength at the weld line relative to the parent material.

Using linear friction welding to metallurgically bond each turbine blade to the turbine disk provides several benefits to the hybrid bonded turbine rotor that may not be realized using conventional bonding techniques such as brazing or diffusion bonding. For example, LFW forms an improved metallurgical bond between single crystal (SC) turbine blades and the powdered metal (PM) turbine disk relative to conventional diffusion bonding orbrazed approaches. Conventional diffusion and brazed approaches may form brittle phases such as carbides at the SC toPMbond line due to diffusion and elemental mixing enabled by the comparative long time exposure to high temperature. These precipitated phases formed from elemental mixing may lead toa brittle bond joint and a subsequent reduced allowable design temperature and stress.The LFW operation also results in only localized heating in the vicinity of thebondplane due toa veryshort thermal exposure that cools ata relativelyfast rate after the weld is formed, thereby minimizing undesirable changesto the single crystal microstructureof the fully heat treated turbine blade and a solution heat treated hybrid bonded turbine rotor in the vicinity of the bond plane. Only a post-weld stress relief heat treatment is required that is compatible to function as a normal aging heat treatment cycle,enabling precipitation of desirable gamma prime second phase in the bond region. Aging at a lower temperature for a longer time helps the microstructure, providing stronger alloy properties (e.g., improved creep strength, fatigue life, etc.). Thelocalized heating from LFW enables both the turbine blade and turbine disk alloystoretain their bulk design microstructures including enabling dual microstructure turbine disks, where the rim has largergrains for creepwhile the borehas smaller grains for optimal LCF life and tensile/burst strength. Conventional diffusion bonding of single crystal turbine blades with the turbine disk requires a non-optimal heat treatment that weakens the properties of the SC turbine blades (loweringcreepand tensile/burst strength)and also results in a sub-optimal turbine disk microstructure. Utilization of LFWalsopermits the option of applying a protective coating to the individual turbine bladesprior tometallurgicallybonding by LFW, as previously described.It is to be understood, however, that a protective coating may be applied to the metallurgically bonded turbine blades after LFW is complete, during a finishing step 80 as hereinafter described.

Exemplary embodiments of the present invention also enable individual replacement of turbine bladesin the field, where damaged turbine blades can be removed and a newturbine bladelinear friction welded to the turbine disk.More specifically, LFW offerseasyreparability of the hybrid bonded turbine rotor,where adamaged turbine blade can beremovedvia Electro-Discharge Machining (EDM), and are placement turbine blade metallurgically bonded to the turbine disk via LFW without compromising the optimized heattreat and metallurgical properties of theundamaged portion(s) of the hybrid bondedturbine rotor.

Method 10 for manufacturing the hybrid bonded turbine rotor according to exemplary embodiments of the present invention continues by machining the bonded assembly (step60). The step of machining the bonded assembly (step 60) includes removing the flash from the weld (sub-step 60a), substantially removing the sacrificial turbine blade material (the oversized root stock) from the turbine blade(s) (sub-step 60b), and refining the shank cavities between adjacent turbine blades (sub-step 60c). The machining step results in a "machined bonded assembly."

The flash removal sub-step 60a comprises removing the flash from the weld via, for example, conventional electro-discharge machining (EDM).Flash removal proceeds radially below the bond plane for stress optimization. The electro-discharge machining can also return the live rim notches to an original determined stress-relieving configuration or the live rim notches may be formed in the flash removal step 60a, with the selected stress-relieving configuration. The flash removing step may be performed after each weld, after a plurality of welds, or after the entire linear friction welding operation is complete (i.e., after the plurality of turbine blades have been linear friction welded to the turbine disk), depending on blade spacing. If blades are closely spaced, it may be preferable to remove the flash after each weld so that linear friction welding may proceed without interference from a circumferentially adjacent turbine blade. In an alternate embodiment, the flash removing step may be performed after linear friction welding every other blade, and then again after linear friction welding the remaining alternate turbine blades, in which case the flash removal step is performed only twice on the bonded assembly, using only two flash cleanup machining set-ups.

The machining sub-step60bof substantially removing the sacrificial turbine blade material forms the gap 157 (e.g., FIG. 6A) between adjacent blade platforms 13 of the circumferentially adjacent turbine blades. Sub-step 60b may be performed after each weld, after several welds, or after all turbine blades are welded to the turbine disk. Sub-step 60b may be performed either after or simultaneously with the flash removal sub-step 60aas previously described.

Sub-step 60c may be performed to refine the shank cavity between each pair of adjacent turbine blades (more particularly, between the shank portions of the plurality of turbine blades). Refinement of the shank cavity includes machining previously-formed live rim notches therein to a final shape and contour (the stress-relieving configuration) or forming the live rim notches with the stress-relieving configuration.

Referring again to FIG. 10, the method 10 for manufacturing the hybrid bonded turbine rotor according to exemplary embodiments of the present invention continues by disposing a platform seal 158 to bridge each gap 157 between the adjacent blade platforms 13 of the circumferentially adjacent turbine blades of the bonded assembly (step 65). Each platform seal is disposed between and held in place under blade platforms of circumferentially adjacent turbine blades. The platform seals may be as described in U.S. Patent No. 8,070,448 by the same named assignee and incorporated herein by reference in its entirety or may be conventional seals. The platform seals may be self-sealing such that no additional machining of the turbine disk is required to hold them in place. The platform seals 158 substantially prevent hot combustion gasingestion under the blade platforms 13 including into the shank cavities 128, thereby controlling heat near the bond plane 126, providing vibration damping, and allowing more physical space between circumferentially adjacent turbine blades, making linear friction welding thereof easier. In addition, the platform seals provide a flow path without aerodynamic disturbances along the circumferentially adjacent blade platforms.

After the LFW bonding and machining steps, the machined bonded assemblyis heat treated (step 70). The heat treatment step relieves stresses in the bond plane region. The machined bonded assembly is heat treated based on the starting condition of the first and second alloys of the turbine disk and turbine bladesprovided respectively in steps 30 and 40. For example, if the starting turbine blades were fully heat treated (i.e., homogenization, solution heat treated, and precipitation aging heat treated) and the turbine disk was only solution heat treated, the post-weld (i.e., after step 50) heat treatment step 70 would include a precipitation heat treatment of the turbine disk, effectively strengthening the alloy of the turbine disk and the weld heat affected zone (HAZ), and also providing stress relief to the bond plane region. As another example, if both the first and second alloys (of the turbine disk and the turbine blades) were fully heat treated such that a fully heat treated turbine disk and turbine blades were provided respectively in steps 30 and 40, then the post-weld heat treatment step 70 may be at a precipitation heat treatment temperature as known in the art, for a reduced amount of time solely to stress relieve the bond plane region but age material in the HAZ that may have been re-solutioned. Although a complete resolution and age could be performed, this would defeat one of the LFW advantages as the grain sizes in the hybrid bonded turbine rotor would grow, reducing low cycle fatigue (LCF) behavior in the turbine disk hub. Solution heat treatments are performed by solution heat treating methods as are well known in the art.

The method 10 for manufacturing the hybrid bonded turbine rotor according to exemplary embodiments of the present invention continues by finishing the heat treated machined bonded assembly (step 80). The heat treated machined bonded assembly may be finished by machining to the final configuration of the hybrid bonded turbine rotor, applying at least one protective coating as previously described, etc. Forward and aft seal plates (portions of the forward and aftseal plates 160 and 161 are depicted in FIG. 6B) may thereafter be mounted on the forward and aft surfaces of the hybrid bonded turbine rotor. As depicted in FIG. 6B, the forward seal plate or ring 160 is disposed adjacent to the front surface of the hybrid bonded turbine rotor 110 to form a flow cavity for directing cooling air to the cooling air supply feed channel 152.

From the foregoing, a hybrid bonded turbine rotor and methods for manufacturing the same are provided. The hybrid bonded turbine rotors according to exemplary embodiments of the present invention eliminate rotor failures due to turbine disk detachment and turbine blade walking, enable diskrim temperatures to safely operate at temperatures exceeding 1500°F without using expensive chargeable cooling air, and enableincreasedT3 and T4.1 temperaturesbeyond the current state of the art to support future cycle requirements to achieve improved performance. The hybrid bonded turbine rotoraccording to exemplary embodiments of the present invention enables a reduction in specificfuel consumption and exhibits turbine rotor weight and cost reductions. The hybrid bonded turbine rotor according to exemplary embodiments of the present invention has an optimized microstructure, thereby optimizing the mechanical properties in the turbine disk bore for burst and fatigue, the disk rim for high temperature creep/fatigue, and the turbine blades for stress rupture, oxidation, and thermo-mechanical fatigue.

In this document, relational terms such as first and second, and the like may be used solely to distinguish one entity or action from another entity or action without necessarily requiring or implying any actual such relationship or order between such entities or actions. Numerical ordinals such as "first," "second,""third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A hybrid bonded turbine rotorcomprising:
a turbine disk having a rim portion comprising:
a live rim of circumferentially continuous material;
a plurality of live rim notches in an outer periphery of the turbine disk alternating with a plurality of raised blade attachment surfaces defining the outer periphery; and
a plurality of turbine blades each metallurgically bonded to a corresponding raised blade attachment surface of the plurality of raised blade attachment surfaces to define a bond plane located at a selected radial position outboard of the live rim; wherein
each pair of adjacent turbine blades defines a shank cavity therebetween, the shank cavity extending radially outwardly from the live rim and including a live rim notch of the plurality of live rim notches, the plurality of live rim notches being disposed below the bond plane and above the live rim.

2. The hybrid bonded turbine rotor of Claim 1, wherein the plurality of live rim notches have a stress-relieving configuration including a selected shape and contour.

3. The hybrid bonded turbine rotor of Claim 1, wherein each turbine blade of the plurality of turbine blades comprises an airfoil portion extending radially outwardly from an outer surface of a blade platform and a shank portion extending radially inwardly from an inner surface of the blade platform, the shank portion including a base for metallurgical bonding of the turbine blade to the corresponding raised blade attachment surface of the plurality of raised blade attachment surfaces.

4. The hybrid bonded turbine rotor of Claim 3, further comprising a plurality of platform seals each disposed to bridge a gap between the blade platforms of adjacent turbine blades in the hybrid bonded turbine rotor.

5. The hybrid bonded turbine rotor of Claim 3, wherein each turbine blade further comprises:
an internal cooling circuit comprising:
a cooling air supply feed channel formed in the shank portion and extending from an inlet opening in a front surface of the shank portion toward a rear surface of the shank portion; and
a plurality of cooling passages extending from the cooling air feed supply channel to the airfoil portion; and
a forward seal plate or ringdisposed adjacent to a first radially-extending face thereof to form a flow cavity for directing cooling air to the cooling air supply feed channel.

6. The hybrid bonded turbine rotor of Claim 5, wherein one or both of the inlet opening and the cooling air supply feed channel each have a predetermined shape and aspect ratio to minimize stress in the bond plane.

7. The hybrid bonded turbine rotor of Claim 3, wherein the shank cavity extends radially outwardly from the live rim to radially inward of the blade platform.

8. The hybrid bonded turbine rotor of Claim 1, wherein the turbine disk comprises a powdered metal (PM) alloy with or without a dual microstructure and the plurality of turbine blades comprise a material selected from the group consisting of a single crystal nickel-based alloy, a directionally solidified nickel-based alloy, a polycrystalline equi-axed nickel-based alloy, a titanium-aluminide alloy, or a nickel-aluminide alloy.

9. A method for manufacturing a hybrid bonded turbine rotor comprising a plurality of turbine blades metallurgically bonded to a turbine disk at a bond plane, the method comprising the steps of:
determining a selected radial position for the bond plane above a live rim of the turbine disk; and
linear friction welding each turbine blade of the plurality of turbine blades to the turbine disk to form the bond plane at the selected radial position.

10. The method of Claim 9, wherein the step of determining a selected radial position comprises using a stress analysis optimization technique to provide a predetermined balance between a peak bore stress/temperature with a peak live rim notch stress/temperature and a predetermined stress tolerance of the bond plane at a temperature of about 1000 to about 1500°F.

11. The method of Claim 9, further comprising, prior to the linear friction welding step and after the determining step, the steps of:
providing the turbine disk comprising a first alloy, the turbine disk having a rim portion comprising the live rim and a plurality of raised blade attachment surfaces defining an outer periphery of the turbine disk;
providing the plurality of turbine blades comprising a second alloy, each turbine blade comprising an airfoil portion extending radially outwardly from an outer surface of a blade platfonn and a shank portion extending radially inwardly from an inner surface of the blade platform, the shank portion including a base configured to be metallurgically bonded to a corresponding raised blade attachment surface of the plurality of raised blade attachment surfaces during the linear friction welding step; and
wherein the step of providing the turbine disk is performed prior to, simultaneously with, or after the step of providing the plurality of turbine blades.

12. The method of Claim 11, wherein the step of providing the turbine disk comprises providing the rim portion with a plurality of live rim notches in the outer periphery of the turbine disk above the live rim alternating with the plurality of raised blade attachment surfaces defining the outer periphery of the turbine disk, the plurality of live rim notches each having a selected stress-relieving configuration.

13. The method of Claim 11, wherein the step of linear friction welding comprises forming a shank cavity between shank portions of each pair of adjacent turbine blades, the shank cavity extending radially outwardly from the live rim.

14. The method of Claim 13, further comprising a machining step comprising one or more of the sub-steps of:
(a) removing flash proximate the bond plane between at least one turbine blade and the turbine disk;
(b) removing sacrificial blade material from at least one turbine blade; and
(c) refining at least one shank cavity.

15. The method of Claim 14, wherein at least one of sub-step (a) or sub-step (c) results in forming, in each shank cavity, a live rim notch below the bond plane and above the live rim, the live rim notch having a selected stress-relieving configuration.
